(19) Europäisches Patentamt
European Patent Office
Office européen des brevets

(11) **EP 1 972 210 B1**

(12) **EUROPEAN PATENT SPECIFICATION**

(45) Date of publication and mention
of the grant of the patent:
**25.08.2010  Bulletin 2010/34**

(51) Int Cl.:
*A23L 3/00* *(2006.01)*   *A23L 3/04* *(2006.01)*

(21) Application number: **07104739.3**

(22) Date of filing: **23.03.2007**

(54) **Pasteurising system control methodology**

Verfahren zur Steuerung eines Pasteurisierungssystems

Procédé de contrôle d'un système de pasteurisation

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**24.09.2008  Bulletin 2008/39**

(73) Proprietor: **SIDEL HOLDINGS & TECHNOLOGY S.A.**
**1009 Pully (CH)**

(72) Inventors:
• **Panella, Graziano**
**37139 Verona (IT)**
• **Solfa, Andrea**
**37139 Verona (IT)**
• **Bisiacco, Mauro**
**37139 Verona (IT)**
• **Beghi, Alessandro**
**37139 Verona (IT)**

(74) Representative: **Lissandrini, Marco et al**
**Bugnion S.p.A.**
**Via Pancaldo 68**
**37138 Verona (IT)**

(56) References cited:
EP-A- 0 960 574        EP-A2- 1 198 996
WO-A-94/19968        GB-A- 2 182 542
US-A- 4 490 401        US-A- 4 801 466
US-A1- 2002 073 652

## Description

The present invention relates to a control method for tunnel pasteurising systems in which, at the end of the treatment, each product must have remained above a predetermined temperature for at least a predetermined time, and accumulated at least a predetermined quantity of pasteurisation units. In tunnel systems, the products, like bottles or other containers, to be pasteurised are fed by a conveyor along a path which is usually divided into three main zones: a heating zone in which the product temperature is gradually raised; a heat treatment zone in which the product temperature is brought to and kept at the pasteurising temperature; and a cooling zone in which the product temperature is gradually lowered. The heat treatment zone is, in turn, divided into a plurality of sub-zones which operate independently. The product is heat treated by applying a flow of hot fluid at the required temperature on the product. Usually the fluid is a liquid, such as hot water, which is injected or sprayed or applied in an equivalent or similar manner on the product; other fluids are contemplatable, like gases, such hot air, which are injected on the product. In the following, the terms "injection", "inject", "injected" will be used to refer to any known manner for applying a flow of hot fluid on products in tunnel pasteurising systems.

Examples of pasteuriser control systems are described in published patents applications EP 1 198996 A1 and EP 960 574 A1.

Other examples of pasteuriser control system are also described in published patent applications WO 94/19968 and US 2002/073652. Patent application WO 94/19968 describes a process for the pasteurisation of liquid contained in containers in a tunnel pasteuriser. The tunnel is divided in a pre-heating zone, a pre-pasteurisation zone, a pasteurisation zone and a cooling zone; each zone comprises a plurality of sprayers that heat up and cool down the containers through spraying with water which is received in a plurality of separate receiving means. The containers in the cooling zone are sprayed with water received in the pre-heating zone. Also, patent application US 2002/073652 describes a pasteurisation unit, for pasteurising products in containers in a flow of containers through successive sections at least for heating, pasteurising and cooling by means of fluid covering them, such as by trickling over them, spraying over them, with a pasteuriser housing and spray devices located inside it.

At present, one of the main problems with tunnel pasteurisers is unforeseen conveyor stops. When these occur, management of the fluid temperatures in the various sub-zones of the heat treatment zone becomes critical, since if this temperatures were kept at the fully operational value, there would be the risk of excessive pasteurisation of the products, keeping them at the pasteurising temperature for too long and giving them too many pasteurisation units. For this reason, the fluid which is injected on the products at least at the heat treatment zone may have two values in each sub-zone: a fully operational value and a cooling value which is lower than the fully operational value.

Consequently, to avoid the problem described above, the temperature of the fluid injected in the sub-zone is usually lowered as soon as all of the products in the sub-zone have completed their pasteurisation cycle.

However, since a pasteuriser may be affected by many unwanted stops, the overlapping of the effects of these stops may result in significant disadvantages for control of the system.

In particular, it is difficult to ensure that no products are over-pasteurised or under-pasteurised.

Moreover, when the system stops, there are problems for the products located at the transition zone between one sub-zone and another. Due to the different fluid temperature levels set in the two sub-zones, both the temperature and the amount of pasteurisation units of products located in one sub-zone may increase significantly more than those of products adjacent to them but located in the other sub-zone. In other words, there is a step between the two sub-zones, which in the successive sub-zones may grow further until there is an irreparable lack of uniformity between the two products.

In this situation, the technical purpose which forms the basis of the present invention is to provide a control method for pasteurising systems which overcomes the above-mentioned disadvantages.

In particular, the technical purpose of the present invention is to provide a control method for pasteurising systems which allows the risks of over-pasteurisation and under-pasteurisation to be avoided.

Another technical purpose of the present invention is to provide a control method for pasteurising systems which allows limitation of the formation between adjacent products of excessive steps in temperature and pasteurisation units accumulated.

The technical purpose specified and the aims indicated are substantially achieved by a control method for pasteurising systems as described in the claims herein.

Further features and advantages of the present invention are more apparent in the detailed description which follows, with reference to several preferred, nonlimiting embodiments of the control method for pasteurising systems.

The control method for pasteurising systems in accordance with the present invention is designed to be implemented relative to pasteurising systems in which movement means, such as a conveyor belt, feed the products to be pasteurised on a movement path along which there are, one after another, at least a heating zone, a heat treatment zone and a cooling zone. In the embodiment referred to below, the movement means can only have two speeds: zero speed (system stopped) and constant fully operational speed. In any case the present invention can also be appropriately adapted for systems in which the speed of the movement means may be modulated.

Whilst the heating and cooling zones may have any structure (in particular in accordance with the prior art), the heat treatment zone is divided into a plurality of sub-zones.

The heating and cooling zones and each of the sub-zones of the heat treatment zone, also each have their own means for injecting fluid, preferably water, on the products which pass through said zone or sub-zone.

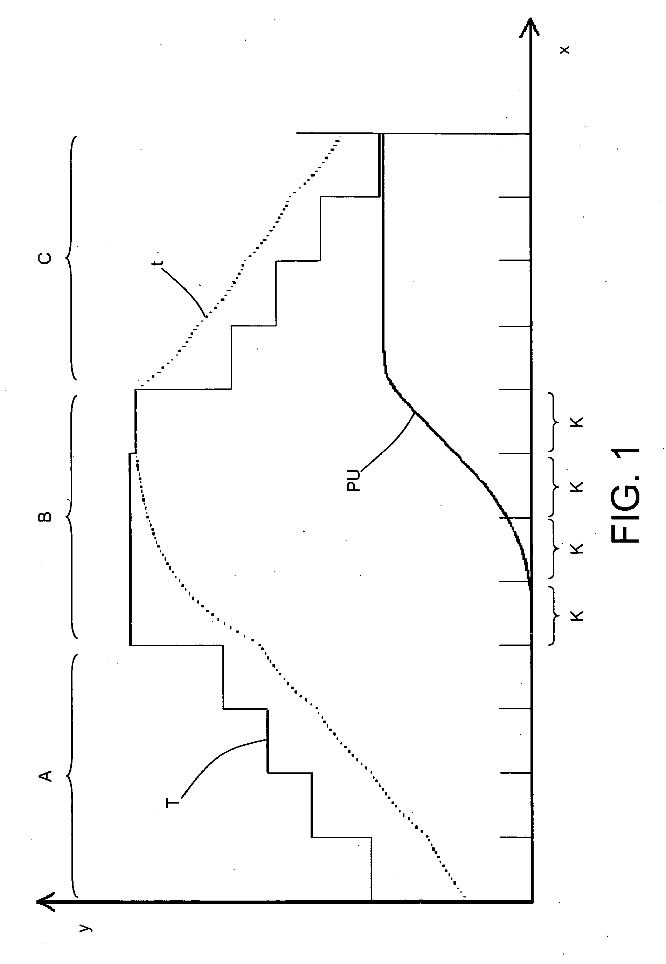

Figure 1 is a graph showing time on the x-axis and both temperatures and pasteurisation units on the y-axis.

The graph refers to a system fully operational condition in which each product is fed at a constant speed.

The graph therefore shows:

- the product heating thermal trend (curve t);
- the temperature of the fluid which is injected on the products at each moment (curve T);
- and the accumulation trend of product pasteurisation units (curve PU) (according to the rules explained below).

Given that the speed is constant, the graph may also be interpreted as a view of the system at a given moment. In this case, the x-axis shows the feed of each product in the system, whilst the y-axis shows the values of the temperature t of the products, the temperature T of the fluid and the quantity of pasteurisation units PU accumulated relative to each product at that specific point of the system.

Therefore, Figure 1 also shows the heating zone A, the heat treatment zone B and the cooling zone C, in addition to the four sub-zones K into which, by way of example, the heat treatment zone B is divided.

Whilst the fluid temperature in the heating and cooling zones (which, in turn, may be divided into several parts) is usually substantially constant over time, each sub-zone K of the heat treatment zone B has its own means for setting the temperature of the fluid injected in that sub-zone at different levels depending on requirements, to make sure that the products are treated at an appropriate temperature.

Advantageously, for each sub-zone K the means for setting the fluid temperature can set the temperature at least at a fully operational value (value of the design ideal cycle) and a cooling value (value lower than the fully operational value for that sub-zone). Moreover, as indicated below, in at least some sub-zones, the means for setting the fluid temperature can also preferably set it to an overheating value, higher than the fully operational value.

In general, the control methodology disclosed comprises a first, preliminary, operating step, of identifying, at least for a first sub-zone K of the heat treatment zone B and advantageously for all of them, a plurality of reference points distributed one after another along the product movement path. Advantageously, said reference points are evenly distributed and are separated from one another by a distance equal to the distance covered by the products in a predetermined time interval as they are fed at the fully operational speed of the movement means. For example, the reference points may be "separated" from one another by two, five, ten, fifteen, etc. seconds of feed at the constant fully operational speed.

It should be noticed that, in practice, the identification of reference points may only be virtual. Moreover, it may be advantageous to identify the reference points along the entire movement path.

Also, according to the control method disclosed, for each reference point a save step, a calculation step and a comparison step are cyclically repeated.

During the save step the heat treatment data relative to the products located at each reference point is saved. In particular, data such as the following is saved for the products located at each reference point: current temperature of the products (usually estimated based on the previous thermal trend), temperature of the fluid injected on the products at that point, time elapsed since entering the tunnel, any dwell time at the point, feed speed at that moment, pasteurisation units accumulated up to that moment (calculated, in the known way, based on the product thermal trend), etc.

Empirical formulas are used to calculate pasteurisation units. For example, in the case of pasteurisation of beer, the quantity of pasteurisation units accumulated ($\Delta PU$) after the product has remained at a temperature t (expressed in degrees Centigrade) for one minute may be calculated as follows: $\Delta PU = 10^{\frac{t-60}{7}}$; for shorter time intervals the accumulation is calculated proportionally. As can easily be established, the accumulation of a pasteurisation unit requires the product to remain at 60°C for one minute.

Moreover, advantageously, the calculation of the pasteurisation units accumulated by a product may begin only when the temperature of the product exceeds a predetermined significant value (for example 50°C), below which pasteurisation may be considered to have zero effect.

In contrast, the calculation step is based on both data saved for the various products up to that moment and at least one hypothetical system future operating condition. It involves calculation of the predicted temperature and pasteurisation unit accumulation trend for the products located at each reference point, supposing a predetermined system operating condition. If the condition of the products at each reference point is known, then by supposing feed at system fully operational speed from that moment onwards and supposing a predetermined fluid temperature in each successive zone and sub-zone, it is possible to calculate the thermal trend to which the individual products will be subjected and how many pasteurisation units they will accumulate.

As indicated, when the calculation step is complete, there is a comparison step in which, for products located at the reference points, the results of the calculation step (pasteurisation units accumulated and thermal trends) are compared with a first and a second treatment requirement which the products must have satisfied at the end of the treatment. The first requirements is that at the end of the heat treatment each product must have accumulated at least a predetermined minimum quantity of pasteurisation units (for example 80% of the pasteurisation units of the ideal cycle), whilst the second requirement is that at the end of the heat treatment each product must have remained at a temperature equal to or greater than a predetermined temperature (for example the pasteurising temperature) for at least a predetermined minimum time.

Based on that control it is therefore possible to establish whether or not the system operating condition will, at the end of the process, allow both of the above-mentioned requirements to be satisfied for all of the products of one or more sub-zones.

If so, the system can be kept (at least until the next cyclical control) in the same operating condition. If not, (at least one product does not satisfy the requirements) the operating condition must be modified. Therefore a new calculation can be carried out and a new comparison based on a new predetermined operating condition, or the temperature may be set directly at a predetermined level.

The final step of the method disclosed involves action on the means for setting the fluid temperature, at least of the first sub-zone subject to the steps described above, based on the result of the comparison step previously carried out.

As already indicated, whilst the present invention may also be applied relative to a single sub-zone, it is preferably applied to two or more sub-zones K of the heat treatment zone B, and advantageously to all of them, although, in the various sub-zones, it may be present in different embodiments (as described below).

Depending on the position along the feed path of the first sub-zone to which the present invention is applied, the step of identifying the reference points may be carried out with reference to at least an end portion of a second sub-zone positioned, again with reference to the movement path, immediately upstream of the first sub-zone. In this case, the save, calculation and comparison steps are also carried out for the products located at the end portion of the second sub-zone, and the step of action on the means for setting the temperature of the fluid injected on the products in the first sub-zone is also carried out on the basis of the result of the comparison made for the products located at the end portion of the second sub-zone. In other words, a control is carried out to ensure that the first and second requirements are also satisfied by the products still located in the end portion of the sub-zone preceding the one which is controlled.

Hereinafter the various sub-zones into which the heat treatment zone may be divided will be indicated as final, penultimate, third last sub-zone, etc., with reference to the order in which the products being processed pass through them. Therefore, the final sub-zone will be that closest to the cooling zone C, the penultimate sub-zone that immediately upstream, and so on.

As already indicated, the present invention may be generically applied to any first sub-zone, which may be the final sub-zone, the penultimate sub-zone, etc. Below are several preferred application methods, in particular regarding the calculation step, depending on the positioning of the first sub-zone.

Hereinafter, the trend of the fluid temperature in the cooling zone will always be considered as constant over time.

In the preferred embodiment, when the first sub-zone corresponds with the final sub-zone, the calculation and comparison steps are carried out with reference to a supposed system operating condition with treatment of the products located at reference points of the final sub-zone using fluid at a first cooling temperature which is lower than its fully operational temperature for the final sub-zone, from that moment until they exit the final sub-zone.

The result of the comparison step may be positive (predicted that all products will satisfy both treatment requirements), or negative (predicted that at least one product will not satisfy at least one requirement).

In the case of a positive result, the step of action on the means for setting the temperature of the fluid to be injected involves setting this temperature to the first cooling temperature.

If the result is negative, either the step of action on the means for setting the temperature of the fluid to be injected sets the temperature thereof to its fully operational temperature for the final sub-zone, or, preferably, the calculation and comparison steps are repeated supposing a system operating condition with treatment of the products located at reference points of the final sub-zone using fluid at the fully operational temperature of said final sub-zone, from that moment until they exit the final sub-zone.

In this case, the comparison step may be refined by controlling if the second requirement is satisfied only for those products which at that moment are at a temperature lower than the pasteurising temperature (or, in general, than the predetermined temperature for the second requirement).

This new comparison step may also have a positive result, in which case the temperature of the fluid injected in the final sub-zone is set to its fully operational temperature for this sub-zone, or a negative result, in which case, advantageously, the step of action on the means for setting the temperature involves setting the temperature of the fluid injected in the final sub-zone to a first overheating temperature which is higher than its fully operational temperature.

By way of example, in the final sub-zone the typical values of fluid temperatures for pasteurising beer are: fully operational temperature 62°C, cooling temperature 54°C and overheating temperature 64°C. In general, the fully operational, cooling and overheating values may be the same in all of the sub-zones, or differ from one sub-zone to the next. Hereinafter reference is made to the latter, more generic case.

Moreover, when the present invention is applied to the final sub-zone, advantageously the calculation and comparison steps also take into account what happens in the end portion of the penultimate sub-zone (therefore corresponding with the generic second sub-zone defined above).

In particular, the action on the means for setting the temperature of the fluid injected in the final sub-zone, for setting the temperature thereof to its first cooling temperature, will only take place when the comparison step predicts that the first and second treatment requirements will also be satisfied by all of the products located in the end portion of the penultimate sub-zone. It should be noticed that, in this case, the calculation step is carried out supposing for the penultimate sub-zone an operating condition in which the fluid temperature is kept at its fully operational level.

It should be noticed that, in contrast, if the comparison has a negative result, the subsequent calculation and comparison carried out with the temperature of the fluid injected in the final sub-zone at its fully operational value, preferably will not take into account what happens in the penultimate sub-zone.

When the present invention is applied for management of the penultimate sub-zone, the calculation and comparison steps are again carried out with reference to a system operating condition with treatment of the products located at reference points of the penultimate sub-zone using fluid at a second cooling temperature which is lower than the fully operational temperature of the fluid in that sub-zone, from that moment until they exit the penultimate sub-zone. Advantageously, said calculation and comparison are carried out supposing that the temperature of the fluid in the final sub-zone is also kept at its cooling value.

Again, the comparison step may have two results: positive and negative (defined, with the appropriate changes, as indicated above relative to the final sub-zone).

If the result is positive, the control method disclosed involves action on the means for setting the temperature of the fluid injected in the penultimate sub-zone, to set it to the second cooling temperature.

If the result is negative, as was the case for the final sub-zone, either the fully operational temperature may be set without further controls, or, preferably, a new calculation and comparison are performed supposing a system operating condition with treatment of the products located at reference points of the penultimate sub-zone using fluid at its fully operational temperature at least until they exit the penultimate sub-zone.

If this second comparison has a positive result, the temperature of the fluid injected in the penultimate sub-zone is set to its fully operational value, whilst if it has a negative result, the step of action on the means for setting the temperature of the fluid injected in the penultimate sub-zone involves setting its temperature to a second overheating value which is higher than its fully operational value for said sub-zone.

Again, it should be noticed that the second comparison step (based on the fully operational temperature) may be limited, as regards the second requirement, only to products which at that moment are at a temperature lower than the pasteurising temperature (or, in general, than the predetermined temperature for the second requirement).

As was the case for the final sub-zone, again for the penultimate sub-zone the preferred embodiment of the present invention involves the calculation, comparison and action steps also taking into account what happens in the end portion of the third last sub-zone (which, in this case therefore corresponds with the generic second sub-zone indicated above).

Consequently, the temperature of the of the fluid injected in the penultimate sub-zone is set at the second cooling temperature only when the comparison step (based on the cooling temperature) establishes that the first and second treatment requirements will also be satisfied by all of the products located in the end portion of the third last sub-zone. Moreover, preferably, as regards the products located in the end portion of the third last sub-zone, the calculation step is carried out with reference to an operating condition in which the temperature of the fluid injected in the third last sub-zone is kept at its fully operational level.

Moreover, the products still in the third last sub-zone are considered to determine the fluid temperature in the penultimate sub-zone only when the products themselves are moving along the system. In addition, the products still in the third last sub-zone are not considered if the second calculation and comparison are required based on the system operating condition with the temperature of the fluid injected in the penultimate sub-zone at its fully operational value.

Advantageously, the length of the end portion of the third last sub-zone considered in the control linked to the penultimate sub-zone (which may for example be equal to "one minute" of product feed), will be less than the length of the penultimate sub-zone considered in the control linked to the final sub-zone (which may approximately be double the other, therefore, for example equal to "two minutes" of product feed).

In contrast, the preferred embodiment of the present invention varies when applied to the sub-zones preceding the penultimate one.

When the first sub-zone for application of the present invention corresponds with the third last sub-zone of the heat treatment zone, implementation of the method must also take into account the temperature of the fluid injected in that sub-zone at the moment when the calculation and comparison steps are carried out.

In particular, if the temperature of the fluid injected in the third last sub-zone is, at the moment of the control, set to a third cooling temperature which is lower than its fully operational value for said sub-zone, the calculation and comparison steps for the third last sub-zone are carried out with reference to the system operating condition at that moment.

If the result of the comparison is positive, nothing will be changed, whilst if the result is negative action is required on the means for setting the temperature of the fluid injected in the third last sub-zone, to set it to its fully operational temperature.

In contrast, when, at the moment of the control, the temperature of the fluid injected in the third last sub-zone is set to its fully operational value for said sub-zone, the calculation and comparison steps are carried out with reference to a system operating condition with treatment of the products located at reference points of the third last sub-zone using fluid injected at the third cooling temperature from that moment until they exit the third last sub-zone.

In this case, if the result is negative the temperature will be kept at its fully operational level, whilst, if the result is positive it will be set at the third cooling temperature.

In the case of the third last sub-zone, according to the preferred control method disclosed, when, at the moment of the calculation, the fluid temperature is set to its fully operational value, there is also a further control step during which, for the products located at each pair of successive reference points of the third last sub-zone, the thermal trend and the difference in pasteurisation units accumulated are calculated. If from that control step it emerges that the thermal trend or the difference in pasteurisation units accumulated between the products located at two adjacent reference points of the third last sub-zone are higher than respective predetermined maximum values, and, at the same time, the comparison step establishes that the first and second treatment requirements will be satisfied by all of the products positioned in the third last sub-zone downstream of the point where the predetermined maximum values were exceeded, action is required on the means for setting the temperature of the fluid injected in the third last sub-zone, to set it to its third cooling temperature.

The purpose of this function is to prevent the formation of excessive "steps" between the temperature and the accumulated pasteurisation units of adjacent products. Such steps, if not countered, could increase excessively, invalidating the entire pasteurising process.

Finally, if the present invention is applied to the sub-zones preceding the third last, in the preferred embodiment their management depends, as for the third last sub-zone, on the temperature value at the moment of performing the calculation and comparison steps.

When the temperature of the fluid injected in such a sub-zone is set to its fully operational value for that sub-zone, the calculation, comparison and action on means for setting the temperature steps are carried out precisely as described above with reference to the third last sub-zone.

This also applies relative to identification of the thermal trend and the difference in pasteurisation units accumulated between products located at two successive reference points.

Instead, when, at the moment of performing the various steps, the temperature of the fluid injected in the sub-zone is set to its cooling value, it is preferably changed to its fully operational level only when the subsequent sub-zone raises its own temperature to its fully operational value.

In conclusion to the above, it should also be noticed that, depending on requirements, the method disclosed may also involve further specifications of the type described in the example of application below.

Moreover, in the absence of other assessments made in accordance with the method described above, the temperature of the fluid injected in each sub-zone is kept at its own fully operational level.

Finally, the present invention also relates to a pasteurising system comprising mainly means for moving products to be pasteurised on a movement path along which there are, one after another, at least a heating zone A, a heat treatment zone B and a cooling zone C, at least the heat treatment zone B in turn being divided into a plurality of sub-zones K. In said system the heating and cooling zones and the sub-zones of the heat treatment zone also each have their own means for injecting fluid on the products which pass through said zone or sub-zone, and at least the sub-zones have their own means for setting the temperature of the fluid to be injected to different levels.

Finally, the system is equipped with an electronic control system for the pasteurising cycle, operatively associated with the zones and sub-zones, with the conveyor, the means for injecting fluid and the means for setting the fluid temperature, the control system being programmed in accordance with the control method described above.

## EXAMPLE OF IMPLEMENTATION

To complete what is described above in generic terms, below there is a brief more detailed description of operation of a system for pasteurising beer which is managed in accordance with the method disclosed.

In this example, the term "PU constraint" refers to the first requirement indicated above, in which all of the product must accumulate at least a predetermined quantity of pasteurisation units, typically 80% of the ideal number (the term "ideal pasteurisation units" means those units accumulated in fully operational operating conditions from the start to the end of the process), whilst "temperature constraint" refers to the second requirement.

The term "predictive procedure" means the set of calculation and comparison steps.

The term "fluid injected in a zone" or "the fluid in a zone" refers to the fluid injected on the products conveyed in said zone.

Moreover, in each sub-zone the temperature may have at most three different values:

1. "cooling value"
2. "fully operational value"
3. "overheating value"

As already indicated, typical values for beer are, respectively: 54°C for the cooling value, 62°C for the fully operational value, 64°C for the overheating value.

It should also be noticed that, preferably, if in a central sub-zone the temperature of the fluid in this zone is set to its "fully operational value", in the central sub-zones upstream of it the fluid temperature value cannot be set to the "cooling value".

For each cycle the predictive procedure supposes that the machine is in movement from that moment onwards and there are no more stops, since this represents the worst case for the risk of under-pasteurisation.

The various central sub-zones are treated differently.

FINAL CENTRAL SUB-ZONE

The temperature of the fluid injected in this zone is set to its "cooling value" if the following condition arises:

The predictive procedure ensures that all of the products (bottles or others) located in the final sub-zone and those at the final two minutes of transit in the penultimate sub-zone will satisfy the temperature constraint and the PU constraint even if the temperature of the fluid injected in the sub-zone considered was set to the "cooling value", whilst that of the fluid injected in the previous sub-zone was set to the "fully operational value".

The temperature of the fluid to be injected in this zone is set to the "overheating value" if at least one of the following conditions arises:

- The predictive procedure indicates that at least one product in the final sub-zone will not satisfy the PU constraint if the machine from now onwards is not subject to any stops, even if the temperature of the fluid injected in the sub-zone considered was set to the "fully operational value";
- The predictive procedure indicates that at least one product, currently in the final sub-zone and at a temperature lower than that set for the temperature constraint, will not satisfy the temperature constraint if the machine from now onwards is not subject to any stops, even if the temperature of the fluid injected in the sub-zone considered were set to the "fully operational value";

The temperature of the fluid injected in this zone is otherwise set to the "fully operational value".

PENULTIMATE CENTRAL SUB-ZONE

The temperature of the fluid injected in this zone is set to the "cooling value" if the following condition arises:

The predictive procedure ensures that all of the products located in this penultimate sub-zone and those at the final minute of transit in the third last sub-zone will satisfy the temperature constraint and the PU constraint even if the temperature of the fluid injected in the sub-zone considered and that of the fluid injected in the subsequent sub-zone were set to the respective "cooling value", whilst the temperature of the fluid injected in the previous sub-zone were set to the "fully operational value".

The temperature of the fluid injected in this zone is set to the "overheating value" if at least one of the following conditions arises:

- The predictive procedure indicates that at least one product in the penultimate sub-zone will not satisfy the PU constraint if the machine from now onwards is not subject to any stops, even if the temperature of the fluid injected in the sub-zone considered were set to the "fully operational value";
- The predictive procedure indicates that at least one product, currently in the penultimate sub-zone and at a temperature lower than that set for the temperature constraint, will not satisfy the temperature constraint if the machine from now onwards is not subject to any stops, even if the respective temperatures of the fluid injected in each of the final and penultimate sub-zones were set to their respective "fully operational values".

The temperature of the fluid injected is otherwise set to the "fully operational value".

However, it should be noticed that if the machine has stopped, the properties of the product still located in the third last sub-zone are no longer controlled.

Finally, it should be noticed that, in some preferred embodiments, if there are only two heat treatment zone sub-zones, the penultimate sub-zone, rather than being managed in the way described above, is managed as indicated in the section below which refers to the third last sub-zone.

THIRD LAST SUB-ZONE

The temperature of the fluid cannot be raised above the "fully operational value" in this sub-zone.

Moreover, the current fluid temperature value should also be considered for selection of the fluid temperature to be raised.

If the fluid temperature is currently set to the "cooling value", the value is only raised to the "fully operational value" if:

The predictive procedure indicates that at least one product in the second half of the sub-zone considered will not satisfy the PU constraint or the temperature constraint with the temperatures currently set, if the machine from now onwards is not subject to any stops.

If the fluid temperature is currently set to the "fully operational value", it will be brought to its "cooling value" if at least one of the following conditions arises:

• The predictive procedure ensures that all of the products in the sub-zone will satisfy the PU constraint and the temperature constraint, even if the temperatures of the fluid injected in the sub-zone considered and in the subsequent sub-zones were set to the respective "cooling values";

• The graph of product temperature or PU accumulation shows a "step" between adjacent products located in the first half of the sub-zone, and the predictive procedure ensures that the product downstream of the step (with reference to the movement path) will satisfy the temperature and PU constraints even with all of the temperatures of the fluid injected in different locations from there onwards set to the "cooling value".

In any case, if the reason for the reduction in temperature is the latter, the temperatures of the fluid injected in all previous sub-zones (if present) are also reduced.

It should be noticed that, in some preferred embodiments, if there are only three heat treatment sub-zones, the third last sub-zone, rather than being managed in the way described above, is managed as indicated in the section below which refers to the previous sub-zones.

PREVIOUS SUB-ZONES (IF PRESENT)

The temperature of fluid cannot be raised above the "fully operational value" in these sub-zones.

The current fluid temperature value should also be considered for selection of the temperature to be raised.

If the fluid temperature is set to the "cooling value", it is brought to the "fully operational value" when the sub-zone which follows that considered raises its temperature to the "fully operational value".

If, instead, the fluid temperature is set to the "fully operational value", it is brought to the "cooling value" if at least one of the following conditions arises:

• The predictive procedure ensures that all of the products in the sub-zone will satisfy the PU constraint and the temperature constraint, even if the temperatures of the fluid injected in the sub-zone considered and the subsequent sub-zones were set to their appropriate "cooling value";

• The graph of product temperature or PU accumulation shows a "step" between adjacent products and the predictive procedure ensures that the product downstream of the step will satisfy the temperature and PU constraints even with the temperatures of the fluid injected in different locations from there onwards all set to their "cooling value".

It should be noticed that, if the reason for the reduction in the temperature value is the latter, the temperatures of the fluid injected in all previous sub-zones (if present) are also reduced.

Moreover, if the sub-zone considered is the first of the heat treatment zone sub-zones, the product "at the first two minutes" of the sub-zone is not considered: the predictive procedure only applies to the rest of the product currently in the sub-zone.

The present invention brings important advantages.

Firstly, the method disclosed provides improved performance compared with conventional ones. On one hand it considers practically all products located in a predetermined sub-zone thanks to the use of a plurality of reference points, whilst on the other hand, thanks to predictions, it allows limit situations to be avoided.

Secondly, it allows energy to be saved compared with conventional systems, bringing a consequent economic advantage.

It should also be noticed that the present invention is relatively easy to produce and even the cost linked to implementation of the invention is not very high.

The invention described may be modified and adapted in several ways without thereby departing from the scope of the inventive concept.

All details of the invention may be substituted by other technically equivalent elements and, in practice, all of the materials used, as well as the shapes and dimensions of the various components, may be any according to requirements.

**Claims**

1. A method for the control of pasteurising systems comprising means for moving products to be pasteurised on a movement path along which there are, one after another, at least a heating zone (A), a heat treatment zone (B) and a cooling zone (C), the heat treatment zone in turn being divided into a plurality of sub-zones (K) each having its own means for injecting fluid on the products passing through said sub-zone and its own means for setting the temperature of the fluid injected in said sub-zone, each sub-zone also having a fully operational temperature of the fluid,
the method for the control being **characterised in that** it comprises the following operating steps:

identifying, at least for a first sub-zone of the heat treatment zone, a plurality of reference points distributed one after another along the path;

and, cyclically:

for the products located at each reference point saving at least some data relative to the heat treatment to which they have been subjected up to that moment;
calculating, based on at least one system predetermined operating condition, the predicted temperature and pasteurisation unit accumulation trend for the products located at each reference point, based on the data saved up to that moment;
comparing the predicted trends calculated with a first and a second treatment requirement which respectively require that, at the end of the heat treatment each product must have accumulated at least a predetermined minimum quantity of pasteurisation units and that each product must have remained at a temperature equal to or greater than a predetermined temperature for at least a predetermined minimum time; and
acting on means for setting the temperature of the fluid injected at least in said first sub-zone based on the result of the comparison.

2. The method for the control according to claim 1, **characterised in that** the step of identifying reference points is also carried out with reference to at least an end portion of a second sub-zone located, with reference to the movement path, immediately upstream of the first sub-zone.

3. The method for the control according to claim 2, **characterised in that** the save, calculation and comparison steps are also carried out for the products located at the end portion of the second sub-zone, and the step of action on the means for setting the temperature of the fluid injected in the first sub-zone is also carried out on the basis of the result of the comparison made for the products located at the end portion of the second sub-zone.

4. The method for the control according to any of the foregoing claims, **characterised in that** it is applied relative to a plurality of heat treatment zone sub-zones.

5. The method for the control according to any of the foregoing claims, **characterised in that**:

when the first sub-zone corresponds with the final sub-zone of the heat treatment zone, that is to say, the one closest to the cooling zone, the calculation and comparison steps are carried out with reference to a system operating condition with treatment of the products located at reference points of the final sub-zone using fluid injected at a first cooling temperature which is lower than the fully operational temperature, from that moment until they exit the final sub-zone; also being **characterised in that**
it involves action on the means for setting the temperature of the fluid injected, to set it to the first cooling temperature, when the comparison step establishes that all products in the final sub-zone will satisfy the first and second treatment requirements.

6. The method for the control according to claims 3 and 5, **characterised in that**, when the second sub-zone corresponds with the penultimate sub-zone of the treatment zone, it involves action on the means for setting the temperature of the fluid injected in the final sub-zone, for setting this temperature to the first cooling temperature when the comparison step establishes that the first and second treatment requirements will also be satisfied by all of the products located in the end portion of the penultimate sub-zone.

7. The method for the control according to claim 6, **characterised in that** as regards the products located in the penultimate sub-zone, the calculation step is carried out with reference to an operating condition in which the temperature of the fluid injected in the penultimate sub-zone is kept at its fully operational level.

8. The method for the control according to claim 5, **characterised in that** if the comparison step establishes that, with the temperature of the fluid injected in the final sub-zone set at the first cooling temperature, at least one product located in the final sub-zone would not satisfy the first or second treatment requirements, the calculation and comparison steps are repeated with reference to a system operating condition involving treatment of the products located at reference points of the final sub-zone using fluid injected at the fully operational temperature of that final sub-zone, from that moment until they exit the final sub-zone, also being **characterised in that** if in this case the comparison step again establishes that at least one product located in the final sub-zone would not satisfy the first treatment requirement or that, being at that moment at a temperature lower than the predetermined temperature, would not satisfy the second treatment requirement, the step of action on the means for setting the temperature of the fluid involves setting the temperature of the fluid injected in the final sub-zone to a first overheating temperature which is higher than the fully operational temperature.

9. The method for the control according to any of the foregoing claims, **characterised in that**:

> when the first sub-zone corresponds with the penultimate sub-zone of the heat treatment zone, with reference to the movement path, the calculation and comparison steps are carried out with reference to a system operating condition with treatment of the products located at reference points of the penultimate sub-zone using fluid injected at a second cooling temperature which is lower than the fully operational temperature of the fluid injected for that sub-zone, from that moment until they exit the penultimate sub-zone; also being **characterised in that**
> it involves action on the means for setting the temperature of the fluid injected in the penultimate sub-zone, to set it to its second cooling temperature, when the comparison step establishes that all products in the penultimate sub-zone will satisfy the first and second treatment requirements.

10. The method for the control according to claims 3 and 9, **characterised in that**, when the second sub-zone corresponds with the third last sub-zone of the treatment zone, with reference to the movement path, it involves action on the means for setting the temperature of the fluid injected in the penultimate sub-zone, for setting this temperature to the second cooling temperature when the comparison step establishes that the first and second treatment requirements will also be satisfied by all of the products located in the end portion of the third last sub-zone.

11. The method for the control according to claim 10, **characterised in that** as regards the products located in the end portion of the third last sub-zone, the calculation step is carried out with reference to an operating condition in which the temperature of the fluid injected in the third last sub-zone is kept at its fully operational level.

12. The method for the control according to claim 10 or 11, **characterised in that** the step of action on the means for setting the temperature of the fluid injected in the penultimate sub-zone also takes into account products located in the end portion of the third last sub-zone, only when the products are moving along the system.

13. The method for the control according to claim 9, **characterised in that** if the comparison step for the penultimate sub-zone establishes that, with the temperature of the fluid injected in the penultimate sub-zone set to the second cooling temperature, at least one product located in the penultimate sub-zone would not satisfy the first or second treatment requirement, the calculation and comparison steps for the penultimate sub-zone are repeated with reference to a system operating condition with treatment of the products located at reference points of the penultimate sub-zone using fluid injected at the fully operational temperature at least until they exit the penultimate sub-zone, also being **characterised in that** if in this case the comparison step again establishes that at least one product located in the penultimate sub-zone would not satisfy the first treatment requirement or that, being at that moment at a temperature lower than the predetermined temperature, would not satisfy the second treatment requirement, the step of action on the means for setting the temperature of the fluid injected in the penultimate sub-zone involves setting said temperature of the fluid injected in penultimate sub-zone to a second overheating value which is higher than the fully operational level.

14. The method for the control according to any of the foregoing claims **characterised in that**:

> when the first sub-zone corresponds with the third last sub-zone of the heat treatment zone, with reference to the movement path, and when the temperature of the fluid injected in the third last sub-zone is set to a third cooling temperature which is lower than its fully operational value **in that** sub-zone, the calculation and comparison steps for the third last sub-zone are carried out with reference to the current system operating condition; also being **characterised in that** it involves action on the means for setting the temperature of the of the fluid injected in the third last sub-zone, to set it to the fully operational temperature, when the comparison step establishes that at least one of the products in the third last sub-zone will not satisfy the first or second treatment requirement.

15. The method for the control according to claim 14, **characterised in that**, when the temperature of the fluid injected in the third last sub-zone is set to a third cooling temperature which is lower than the fully operational value of that sub-zone, the calculation and comparison steps for the third last sub-zone are only carried out relative to the products located in the second half of the third last sub-zone.

16. The method for the control according to any of the foregoing claims **characterised in that**:

> when the first sub-zone corresponds with the third last sub-zone of the heat treatment zone, with reference to the movement path, and when the temperature of the fluid injected in the third last sub-zone is set to the fully operational value of that sub-zone, the calculation and comparison steps are carried out with reference to a system operating condition with treatment of the products located at reference points of the third last sub-zone using fluid injected at a third cooling temperature which is lower than the fully operational temperature for that sub-zone, from that moment until they exit the third last sub-zone; also being **characterised in that**
> it involves action on the means for setting the temperature of the fluid injected in the third last sub-zone, to set it to the third cooling temperature, when the comparison step establishes that all products in the third last sub-zone will satisfy the first and second treatment requirements.

17. The method for the control according to any of the foregoing claims **characterised in that**:

> when the first sub-zone corresponds with the third last sub-zone of the heat treatment zone, with reference to the movement path, and when the temperature of the fluid injected in the third last sub-zone is set to the fully operational value of that sub-zone, a further control step is carried out during which the thermal trend and the difference in pasteurisation units accumulated between the products located at two successive reference points of the third last sub-zone are calculated, also being **characterised in that**
> it involves action on the means for setting the temperature of the fluid injected in the third last sub-zone, to set it to a third cooling temperature which is lower than the fully operational temperature, when the control step indicates that the thermal trend or the difference in pasteurisation units accumulated between the products located at two adjacent reference points are higher than respective predetermined maximum values, and the comparison step establishes that the first and second treatment requirements will be satisfied by all of the products located in the third last sub-zone downstream of the point where the predetermined maximum values were exceeded.

18. The method for the control according to claim 17, **characterised in that** the control step is only carried out relative to products located in the first half of the third last sub-zone.

19. The method for the control according to any of the claims from 1 to 8, **characterised in that** when the heat treatment zone only comprises two sub-zones, and when the first sub-zone corresponds with the penultimate sub-zone of the heat treatment zone, with reference to the movement path, the penultimate sub-zone is managed as indicated in any of the claims from 14 to 17 relative to the third last sub-zone.

20. The method for the control according to any of the foregoing claims, **characterised in that**:

> when the first sub-zone corresponds with a sub-zone upstream of the third last sub-zone of the heat treatment zone, with reference to the movement path, and when the temperature of the fluid injected in the first sub-zone is set to the fully operational value of that sub-zone, the calculation and comparison steps for that first sub-zone are carried out with reference to a system operating condition with treatment of the products located at reference points of the first sub-zone using fluid injected at a fourth cooling temperature which is lower than the fully operational temperature for that sub-zone, from that moment until they exit the first sub-zone; also being **characterised in that**
> it involves action on the means for setting the temperature of the fluid injected in the first sub-zone, to set it to the fourth cooling temperature, when the comparison step establishes that all products in the first sub-zone will satisfy the first and second treatment requirements.

21. The method for the control according to any of the foregoing claims, **characterised in that**:

> when the first sub-zone corresponds with a sub-zone upstream of the third last sub-zone of the heat treatment zone, with reference to the movement path, and when the temperature of the fluid injected in the first sub-zone is set to the fully operational value of that sub-zone, a further control step is carried out during which the thermal trend and the difference in pasteurisation units accumulated between the products positioned at two successive reference points of the first sub-zone are calculated, also being **characterised in that**

it involves action on the means for setting the temperature of the fluid injected in the first sub-zone, to set it to a fourth cooling temperature which is lower than the fully operational temperature, when the control step indicates that the thermal trend or the difference in pasteurisation units accumulated between the products positioned at two adjacent reference points are higher than respective predetermined maximum values, and the comparison step establishes that the first and second treatment requirements will be satisfied by all of the products located in the first sub-zone downstream of the point where the predetermined maximum values were exceeded.

22. The method for the control according to any of the claims from 1 to 18, **characterised in that** when the heat treatment zone only comprises three sub-zones, and when the first sub-zone corresponds with the third last sub-zone of the heat treatment zone, with reference to the movement path, the third last sub-zone is managed as indicated in claim 20 or 21 relative to the sub-zones preceding the third last sub-zone.

23. The method for the control according to any of the foregoing claims, **characterised in that**, in the absence of other specific assessments, the temperature of fluid injected in each sub-zone is kept at its fully operational level.

24. A pasteurising system comprising:

means for moving products to be pasteurised on a movement path along which there are, one after another, at least a heating zone (A), a heat treatment zone (B) and a cooling zone (C), the heat treatment zone in turn being divided into a plurality of sub-zones (K);
the heating and cooling zones and the sub-zones of the heat treatment zone also each having their own means for injecting fluid on the products which pass through said zone and their own means for setting the temperature of the fluid injected in said zones or sub-zones;
an electronic control system for the pasteurising cycle, operatively associated with the zones and sub-zones, with the conveyor, the means for injecting fluid and the means for setting the fluid temperature;
the pasteurising system being **characterised in that** the electronic control system is programmed in accordance with the control method according to any of the foregoing claims.

**Patentansprüche**

1. Verfahren zur Steuerung eines Pasteurisierungssystems, enthaltend Mittel zum Bewegen der zu pasteurisierenden Produkte auf einer Vorlaufbahn, entlang welcher sich einer nach dem anderen wenigstens ein Heizbereich (A), ein Wärmebehandlungsbereich (B) und ein Kühlbereich (C) befinden, wobei der Wärmebehandlungsbereich wiederum in eine Anzahl von Unterbereichen (K) aufgeteilt ist, von denen jeder seine eigenen Mittel zum Sprühen von Flüssigkeit auf die durch den genannten Unterbereich laufenden Produkte hat, sowie seine eigenen Mittel zum Einstellen der Temperatur der in den genannten Unterbereich eingesprühten Flüssigkeit, wobei jeder Unterbereich auch eine volle Betriebstemperatur der Flüssigkeit hat, und wobei das Verfahren zum Steuern **dadurch gekennzeichnet ist, dass** es die folgenden Betriebsphasen enthält:

- Bestimmen, wenigstens für einen ersten Unterbereich des Wärmebehandlungsbereiches, einer Anzahl von Bezugspunkten, verteilt einer nach dem anderen entlang der Bahn; und zyklisch:
- für die an einem jeden Bezugspunkt angeordneten Produkte das Speichern von wenigstens einigen Daten betreffend die Wärmebehandlung, der sie bis zu diesem Moment unterzogen worden sind;
- Berechnen, aufgrund von wenigstens einem vom System vorgegebenen Betriebszustand, des vorausgesehenen Verlaufs der Temperatur und des Ansammelns der Pasteurisiereinheiten für die an jedem Bezugspunkt angeordneten Produkte, basierend auf den bis zu diesem Moment gespeicherten Daten;
- Vergleichen des vorausgesehenen Verlaufs, berechnet mit einer ersten und einer zweiten Voraussetzung der Behandlung, welche jeweils vorsehen, dass am Ende der Wärmebehandlung jedes Produkt wenigstens eine vorgegebene minimale Menge an Pasteurisiereinheiten angesammelt haben muss, und dass jedes Produkt bei einer Temperatur gleich oder grösser als eine vorgegebene Temperatur für wenigstens eine vorgegebene Mindestdauer verblieben sein muss; und
- Einwirken auf die Mittel zum Einstellen der Temperatur der in wenigstens den genannten ersten Unterbereich eingesprühten Flüssigkeit, basierend auf dem Ergebnis des Vergleichs.

2. Verfahren zur Steuerung nach Patentanspruch 1, **dadurch gekennzeichnet, dass** die Phase des Bestimmens der Bezugspunkte auch unter Bezugnahme auf wenigstens einen Endabschnitt eines zweiten Unterbereiches ausgeführt wird, der unter Bezugnahme auf die Vorlaufbahn unmittelbar stromaufwärts des ersten Unterbereiches angeordnet ist.

3. Verfahren zur Steuerung nach Patentanspruch 2, **dadurch gekennzeichnet, dass** die Speicher-, Berechnungs- und Vergleichsphasen auch für die Produkte ausgeführt werden, die an dem Endabschnitt des zweiten Unterbereiches angeordnet sind, und dass die Phase des Einwirkens auf die Mittel zum Einstellen der Temperatur der in den ersten Unterbereich eingesprühten Flüssigkeit auch basierend auf dem Ergebnis des Vergleichs ausgeführt wird, vorgenommen für die an dem Endabschnitt des zweiten Unterbereiches angeordneten Produkte.

4. Verfahren zur Steuerung nach einem jeden der vorstehenden Patentansprüche, **dadurch gekennzeichnet, dass** es im Verhältnis zu einer Anzahl von Unterbereichen des Wärmebehandlungsbereiches angewandt wird.

5. Verfahren zur Steuerung nach einem jeden der vorstehenden Patentansprüche, **dadurch gekennzeichnet, dass**:

   - wenn der erste Unterbereich mit dem letzten Unterbereich des Wärmebehandlungsbereiches übereinstimmt, das heisst dem dicht an dem Kühlbereich liegenden, werden die Berechnungs- und Vergleichsphasen unter Bezugnahme auf einen Betriebszustand des Systems mit der Behandlung der an den Bezugspunkten des letzten Unterbereiches angeordneten Produkten unter Verwendung einer eingesprühten Flüssigkeit mit einer ersten Kühltemperatur ausgeführt, welche niedriger ist als die volle Betriebstemperatur, und zwar von dem Moment an bis zu ihrem Austritt aus dem letzten Unterbereich; und ebenfalls **dadurch gekennzeichnet, dass** - es das Einwirken auf die Mittel zum Einstellen der Temperatur der eingesprühten Flüssigkeit einbezieht, um sie auf die erste Kühltemperatur zu bringen, wenn die Vergleichsphase festlegt, dass alle Produkte in dem letzten Unterbereich den ersten und zweiten Voraussetzungen der Behandlung entsprechen.

6. Verfahren zur Steuerung nach den Patentansprüchen 3 und 5, **dadurch gekennzeichnet, dass**, wenn der zweite Unterbereich mit dem vorletzten Unterbereich des Behandlungsbereiches übereinstimmt, es das Einwirken auf die Mittel zum Einstellen der Temperatur der in den letzten Unterbereich eingesprühten Flüssigkeit einbezieht, um diese Temperatur auf die erste Kühltemperatur zu bringen, wenn die Vergleichsphase festlegt, dass auch alle Produkte den ersten und zweiten Voraussetzungen der Behandlung entsprechen, die an dem Endabschnitt des vorletzten Unterbereiches angeordnet sind.

7. Verfahren zur Steuerung nach Patentanspruch 6, **dadurch gekennzeichnet, dass** betreffend die Produkte, die in dem vorletzten Unterbereich angeordnet sind, die Berechnungsphase unter Bezugnahme auf einen Betriebszustand ausgeführt wird, in welchem die Temperatur der in den vorletzten Unterbereich eingesprühten Flüssigkeit auf ihrem vollen Betriebsniveau gehalten wird.

8. Verfahren zur Steuerung nach Patentanspruch 5, **dadurch gekennzeichnet, dass**, wenn die Vergleichsphase festlegt, dass mit der Temperatur der in den letzten Unterbereich eingesprühten Flüssigkeit, eingestellt auf die erste Kühltemperatur, wenigstens ein in dem letzten Unterbereich angeordnetes Produkt nicht den ersten und zweiten Voraussetzungen der Behandlung entsprechen sollte, die Berechnungs- und Vergleichsphasen wiederholt werden unter Bezugnahme auf einen Betriebszustand des Systems, das die Behandlung der an den Bezugspunkten des letzten Unterbereiches angeordneten Produkte einbezieht, unter Verwendung von bei voller Betriebstemperatur des letzten Unterbereiches eingesprühter Flüssigkeit, und zwar von diesem Moment an bis sie aus dem letzten Unterbereich austreten, wobei es ebenfalls **dadurch gekennzeichnet ist, dass**, wenn in diesem Falle die Vergleichsphase wieder festlegt, dass wenigstens ein in dem letzten Unterbereich angeordnetes Produkt nicht der ersten Behandlungsvoraussetzung entsprechen sollte oder dass, da es sich in diesem Moment bei einer niedrigeren Temperatur als die vorgegebene Temperatur befindet, nicht der zweiten Behandlungsvoraussetzung entspricht, die Phase des Einwirkens auf die Mittel zum Einstellen der Temperatur der Flüssigkeit das Einstellen der Temperatur der in den letzten Unterbereich eingesprühten Flüssigkeit einbezieht, und zwar bis auf eine erste Überhitzungstemperatur, welche höher ist als die volle Betriebstemperatur.

9. Verfahren zur Steuerung nach einem jeden der vorstehenden Patentansprüche, **dadurch gekennzeichnet, dass**,

   - wenn der erste Unterbereich unter Bezugnahme auf die Vorlaufbahn mit dem vorletzten Unterbereich des Wärmebehandlungsbereiches übereinstimmt, die Berechnungs- und Vergleichsphasen unter Bezugnahme auf einen Betriebszustand des Systems mit der Behandlung der an den Bezugspunkten des vorletzten Unterbereiches angeordneten Produkte unter Verwendung von eingesprühter Flüssigkeit bei einer zweiten Kühltemperatur, welche niedriger ist als die volle Betriebstemperatur der eingesprühten Flüssigkeit für diesen Unterbereich, ausgeführt werden, und zwar von diesem Moment an bis zu deren Austritt aus dem vorletzten Unterbereich; und ebenfalls **dadurch gekennzeichnet, dass**

- es das Einwirken auf die Mittel zum Einstellen der Temperatur der in den vorletzten Unterbereich eingesprühten Flüssigkeit einbezieht, um diese auf eine zweite Kühltemperatur zu bringen, wenn die Vergleichsphase festlegt, dass alle Produkte in dem vorletzten Unterbereich den ersten und zweiten Voraussetzungen der Behandlung entsprechen.

10. Verfahren zur Steuerung nach den Patentansprüchen 3 und 9, **dadurch gekennzeichnet, dass**, wenn unter Bezugnahme auf die Vorlaufbahn der zweite Unterbereich mit dem drittletzten Unterbereich des Behandlungsbereiches übereinstimmt, es die Einwirkung auf die Mittel zum Einstellen der Temperatur der in den vorletzten Unterbereich eingesprühten Flüssigkeit einbezieht, um diese Temperatur auf die zweite Kühltemperatur zu bringen, wenn die Vergleichsphase festlegt, dass ebenfalls alle in dem Endabschnitt des drittletzten Unterbereiches angeordneten Produkte den ersten und zweiten Voraussetzungen der Behandlung entsprechen.

11. Verfahren zur Steuerung nach Patentanspruch 10, **dadurch gekennzeichnet, dass** betreffend die in dem Endabschnitt des drittletzten Unterbereiches angeordneten Produkte die Berechnungsphase unter Bezugnahme auf einen Betriebszustand ausgeführt wird, in welchem die Temperatur der in den drittletzten Unterbereich eingesprühten Flüssigkeit auf ihrem vollen Betriebsniveau gehalten wird.

12. Verfahren zur Steuerung nach Patentanspruch 10 oder 11, **dadurch gekennzeichnet, dass** die Phase des Einwirkens auf die Mittel zum Einstellen der Temperatur der in den vorletzten Unterbereich eingesprühten Flüssigkeit auch Produkte berücksichtigt, die in dem Endabschnitt des drittletzten Unterabschnitts angeordnet sind, und zwar nur, wenn die Produkte entlang dem System in Bewegung sind.

13. Verfahren zur Steuerung nach Patentanspruch 9, **dadurch gekennzeichnet, dass**, wenn die Vergleichsphase für den vorletzten Unterbereich festlegt, dass mit der Temperatur der in den vorletzten Unterbereich eingesprühten Flüssigkeit, eingestellt auf die zweite Kühltemperatur, wenigstens ein in dem vorletzten Unterbereich angeordnetes Produkt nicht den ersten oder zweiten Voraussetzungen der Behandlung entspricht, die Berechnungs- und Vergleichsphasen für den vorletzten Unterbereich wiederholt werden unter Bezugnahme auf einen Betriebszustand des Systems mit der Behandlung der Produkte, die an den Bezugspunkten des vorletzten Unterbereiches angeordnet sind, unter Verwendung von bei voller Betriebstemperatur eingesprühter Flüssigkeit, bis sie aus dem vorletzten Unterbereich austreten, und ebenfalls **dadurch gekennzeichnet, dass**, wenn in diesem Falle die Vergleichsphase wieder festlegt, dass wenigstens ein in dem vorletzten Unterbereich angeordnetes Produkt nicht der ersten Voraussetzung der Behandlung entsprechen sollte oder dass es, da es sich in diesem Moment bei einer niedrigeren Temperatur als die vorgegebene Temperatur befindet, nicht der zweiten Voraussetzung der Behandlung entsprechen sollte, die Phase des Einwirkens auf die Mittel zum Einstellen der Temperatur der Flüssigkeit das Einstellen der Temperatur der in den vorletzten Unterbereich eingesprühten Flüssigkeit das Einstellen der genannten Temperatur der in den vorletzten Unterbereich eingesprühten Flüssigkeit auf einen zweiten Überhitzungswert einbezieht, welcher höher ist als der des vollen Betriebsniveaus.

14. Verfahren zur Steuerung nach einem jeden der vorstehenden Patentansprüche, **dadurch gekennzeichnet, dass**:

    - wenn der erste Unterbereich unter Bezugnahme auf die Vorlaufbahn mit dem drittletzten Unterbereich des Wärmebehandlungsbereiches übereinstimmt, und wenn die Temperatur der in den drittletzten Unterbereich eingesprühten Flüssigkeit auf eine dritte Kühltemperatur eingestellt ist, welche niedriger ist als die des vollen Betriebswertes in diesem Unterbereich, die Berechnungs- und Vergleichsphasen für den drittletzten Unterbereich unter Bezugnahme auf den laufenden Betriebszustand des System ausgeführt werden; und ebenfalls **dadurch gekennzeichnet, dass** es

    - die Einwirkung auf die Mittel zum Einstellen der Temperatur der in den drittletzten Unterbereich eingesprühten Flüssigkeit einbezieht, um diese auf die volle Betriebstemperatur einzustellen, wenn die Vergleichsphase festlegt, dass wenigstens eins der Produkte in dem drittletzten Unterbereich nicht den ersten oder zweiten Voraussetzungen der Behandlung entspricht.

15. Verfahren zur Steuerung nach Patentanspruch 14, **dadurch gekennzeichnet, dass**, wenn die Temperatur der in den drittletzten Unterbereich eingesprühten Flüssigkeit auf eine dritte Kühltemperatur eingestellt ist, welche niedriger ist als die des vollen Betriebswertes, die Berechnungs- und Vergleichsphasen für den drittletzten Unterbereich nur betreffend die Produkte ausgeführt werden, die in der zweiten Hälfte des drittletzten Unterbereiches angeordnet sind.

**16.** Verfahren zur Steuerung nach einem jeden der vorstehenden Patentansprüche, **dadurch gekennzeichnet, dass** es:

- wenn der erste Unterbereich unter Bezugnahme auf die Vorlaufbahn mit dem drittletzten Unterbereich des Wärmebehandlungsbereiches übereinstimmt, und wenn die Temperatur der in den drittletzten Unterbereich eingesprühten Flüssigkeit auf die des vollen Betriebswertes dieses Unterbereiches eingestellt ist, die Berechnungs- und Vergleichsphasen unter Bezugnahme auf einen Betriebszustand des Systems mit der Behandlung der Produkte ausgeführt werden, die an den Bezugspunkten des drittletzten Unterbereiches angeordnet sind, unter Verwendung der mit einer dritten Kühltemperatur eingesprühten Flüssigkeit, welche niedriger ist als die volle Betriebstemperatur für diesen Unterbereich, und zwar von diesem Moment an bis zu deren Austritt aus dem drittletzten Unterbereich; und ebenfalls **dadurch gekennzeichnet, dass** es
- die Einwirkung auf die Mittel zum Einstellen der Temperatur der in den drittletzten Unterbereich eingesprühten Flüssigkeit einbezieht, um diese auf die dritte Kühltemperatur einzustellen, wenn die Vergleichsphase festlegt, dass alle Produkte in dem drittletzten Unterbereich den ersten oder zweiten Voraussetzungen der Behandlung entsprechen.

**17.** Verfahren zur Steuerung nach einem jeden der vorstehenden Patentansprüche, **dadurch gekennzeichnet, dass**:

- wenn der erste Unterbereich unter Bezugnahme auf die Vorlaufbahn mit dem drittletzten Unterbereich des Wärmebehandlungsbereiches übereinstimmt, und wenn die Temperatur der in den drittletzten Unterbereich eingesprühten Flüssigkeit auf die des vollen Betriebswertes in diesem Unterbereich eingestellt ist, eine weitere Kontrollphase ausgeführt wird, während welcher der thermische Sprung und die Differenz in Pasteurisiereinheiten, angesammelt zwischen den an zwei aufeinanderfolgenden Bezugspunkten des drittletzten Unterbereiches angeordneten Produkten, berechnet werden; und ebenfalls **dadurch gekennzeichnet, dass** es
- die Einwirkung auf die Mittel zum Einstellen der Temperatur der in den drittletzten Unterbereich eingesprühten Flüssigkeit einbezieht, um diese auf eine dritte Kühltemperatur einzustellen, welche niedriger ist als die volle Betriebstemperatur, wenn die Kontrollphase anzeigt, dass der thermische Sprung oder die Differenz in Pasteurisiereinheiten, angesammelt zwischen den an zwei aufeinanderfolgenden Bezugspunkten angeordneten Produkten, höher sind als jeweilige vorgegebene maximale Werte, und die Vergleichsphase festlegt, dass alle Produkte, die in dem drittletzten Unterbereich stromabwärts des Punktes angeordnet sind, an welchem die vorgegebenen maximalen Werte überschritten wurden, den ersten und zweiten Voraussetzungen der Behandlung entsprechen.

**18.** Verfahren zur Steuerung nach Patentanspruch 17, **dadurch gekennzeichnet, dass** die Kontrollphase nur die Produkte betreffend ausgeführt wird, die in der ersten Hälfte des drittletzten Unterbereiches angeordnet sind.

**19.** Verfahren zur Steuerung nach einem jeden der Patentansprüche von 1 bis 8, **dadurch gekennzeichnet, dass**, wenn der Wärmebehandlungsbereich nur zwei Unterbereiche enthält, und wenn der erste Unterbereich unter Bezugnahme auf die Vorlaufbahn mit dem vorletzten Unterbereich des Wärmebehandlungsbereiches übereinstimmt, der vorletzte Unterbereich wie in jedem der Patentansprüche von 14 bis 17 im Verhältnis zu dem drittletzten Unterbereich gesteuert wird.

**20.** Verfahren zur Steuerung nach einem jeden der vorstehenden Patentansprüche, **dadurch gekennzeichnet, dass**:

- wenn der erste Unterbereich unter Bezugnahme auf die Vorlaufbahn mit einem Unterbereich stromaufwärts des drittletzten Unterbereiches des Wärmebehandlungsbereiches übereinstimmt, und wenn die Temperatur der in den ersten Unterbereich eingesprühten Flüssigkeit auf den vollen Betriebswert dieses Unterbereiches eingestellt ist, die Berechnungs- und Vergleichsphasen für diesen ersten Unterbereich unter Bezugnahme auf einen Betriebszustand des Systems mit Behandlung der an den Bezugspunkten des ersten Unterbereichs angeordneten Produkte ausgeführt werden, unter Verwendung von Flüssigkeit, eingesprüht mit einer vierten Kühltemperatur, welche niedriger ist als die volle Betriebstemperatur für diesen Unterbereich, und zwar von diesem Moment an bis zu deren Austritt aus dem ersten Unterbereich; und ebenfalls **dadurch gekennzeichnet, dass**
- es die Einwirkung auf die Mittel zum Einstellen der Temperatur der in den ersten Unterbereich eingesprühten Flüssigkeit einbezieht, um sie auf die vierte Kühltemperatur einzustellen, wenn die Vergleichsphase festlegt, dass alle Produkte in dem ersten Unterbereich den ersten und zweiten Voraussetzungen der Behandlung entsprechen.

21. Verfahren zur Steuerung nach einem jeden der vorstehenden Patentansprüche, **dadurch gekennzeichnet, dass**:

- wenn der erste Unterbereich unter Bezugnahme auf die Vorlaufbahn mit einem Unterbereich stromaufwärts des drittletzten Unterbereiches des Wärmebehandlungsbereiches übereinstimmt, und wenn die Temperatur der in den ersten Unterbereich eingesprühten Flüssigkeit auf die des vollen Betriebswertes dieses Unterbereiches eingestellt ist, eine weitere Kontrollphase ausgeführt wird, während welcher der thermische Sprung und die Differenz in Pasteurisiereinheiten, angesammelt zwischen den an zwei aufeinanderfolgenden Bezugspunkten des ersten Unterbereiches angeordneten Produkten berechnet werden, und ebenfalls **dadurch gekennzeichnet, dass**

- es die Einwirkung auf die Mittel zum Einstellen der Temperatur der in den ersten Unterbereich eingesprühten Flüssigkeit einbezieht, um sie auf eine vierte Kühltemperatur einzustellen, welche niedriger ist als die volle Betriebstemperatur, wenn die Kontrollphase anzeigt, dass der thermische Sprung oder die Differenz in Pasteurisiereinheiten, angesammelt zwischen den an zwei aneinandergrenzenden Bezugspunkten angeordneten Produkten, höher ist als jeweilige vorgegebene maximale Werte, und die Vergleichsphase festlegt, dass alle Produkte, die in dem ersten Unterbereich stromabwärts des Punktes angeordnet sind, an welchem die vorgegebenen maximalen Werte überschritten wurden, den ersten und zweiten Voraussetzungen der Behandlung entsprechen.

22. Verfahren zur Steuerung nach einem jeden der Patentansprüche von 1 bis 18, **dadurch gekennzeichnet, dass**, wenn der Wärmebehandlungsbereich nur drei Unterbereiche enthält, und wenn der erste Unterbereich unter Bezugnahme auf die Vorlaufbahn mit dem drittletzten Unterbereich des Wärmebehandlungsbereiches übereinstimmt, der drittletzte Unterbereich im Verhältnis zu den Unterbereichen verwaltet wird, die dem drittletzten Unterbereich vorausgehen, wie in Patentanspruch 20 oder 21 angegeben ist.

23. Verfahren zur Steuerung nach einem jeden der vorstehenden Patentansprüche, **dadurch gekennzeichnet, dass** bei Fehlen von anderen spezifischen Bewertungen die Temperatur der in jeden Unterbereich eingesprühten Flüssigkeit auf ihrem vollen Betriebsniveau gehalten wird.

24. Pasteurisiersystem, enthaltend:

- Mittel zum Bewegen der zu pasteurisierenden Produkte auf einer Vorlaufbahn, entlang welcher einer nach dem anderen wenigstens ein Heizbereich (A), ein Wärmebehandlungsbereich (B) und ein Kühlbereich (C) angeordnet sind, wobei der Wärmebehandlungsbereich wiederum in eine Anzahl von Unterbereichen (K) aufgeteilt ist;
- wobei die Heiz- und Kühlbereiche und die Unterbereiche des Wärmebehandlungsbereiches jeder auch eigene Mittel zum Sprühen von Flüssigkeit auf die Produkte haben, die durch den genannten Bereich laufen, sowie ihre eigenen Mittel zum Einstellen der Temperatur der in die genannten Bereiche oder Unterbereiche eingesprühten Flüssigkeit;
- ein elektronisches Steuersystem für den Pasteurisierzyklus, betrieblich zugeordnet den Bereichen und Unterbereichen, dem Förderer, den Mitteln zum Einsprühen der Flüssigkeit und den Mitteln zum Einstellen der Temperatur der Flüssigkeit;
- wobei das Pasteurisiersystem **dadurch gekennzeichnet ist, dass** die elektronischen Steuermittel in Übereinstimmung mit dem Steuerverfahren programmiert sind, und zwar nach jedem der vorstehenden Patentansprüche.

## Revendications

1. Un procédé de contrôle de systèmes de pasteurisation comprenant des moyens destinés à mouvoir des produits à pasteuriser sur un parcours de déplacement le long duquel sont disposées, les unes après les autres, au moins une zone de chauffage (A), une zone de traitement thermique (B) et une zone de refroidissement (C), la zone de traitement thermique étant à son tour subdivisée en une pluralité de sous-zones (K) ayant chacune leurs propres moyens pour injecter un fluide sur les produits qui traversent ladite sous-zone et leurs propres moyens pour régler la température du fluide injecté dans ladite sous-zone, chaque sous-zone ayant aussi une température de régime du fluide,

le procédé de contrôle étant **caractérisé en ce qu'**il comprend les phases opérationnelles suivantes :

identifier, au moins pour une première sous-zone de la zone de traitement thermique, une pluralité de points de référence répartis les uns après les autres le long du parcours ;

et, cycliquement :

pour les produits situés au niveau de chaque point de référence, enregistrer au moins certaines données relatives au traitement thermique auquel ils ont été soumis jusqu'à ce moment ;
calculer, en fonction d'au moins une condition opérationnelle prédéfinie du système, l'évolution prévue de la température et de l'accumulation d'unités de pasteurisation pour les produits situés au niveau de chaque point de référence, en fonction des données enregistrées jusqu'à ce moment ;
comparer les évolutions prévues calculées avec une première et une deuxième conditions requises de traitement qui prévoient respectivement que, à la fin du traitement thermique, chaque produit doit avoir accumulé au moins une quantité minimum prédéfinie d'unités de pasteurisation et que chaque produit doit être resté à une température égale ou supérieure à une température prédéfinie pendant au moins un temps minimum prédéfini ; et
agir sur des moyens de réglage de la température du fluide injecté au moins dans ladite première sous-zone en fonction du résultat de la comparaison.

2. Le procédé de contrôle selon la revendication 1, **caractérisé en ce que** la phase d'identification des points de référence est également effectuée en se référant à au moins une portion finale d'une deuxième sous-zone située, en se référant au parcours de déplacement, juste en amont de la première sous-zone.

3. Le procédé de contrôle selon la revendication 2, **caractérisé en ce que** les phases d'enregistrement, de calcul et de comparaison sont également effectuées pour les produits situés au niveau de la portion finale de la deuxième sous-zone, et la phase d'action sur les moyens de réglage de la température du fluide injecté dans la première sous-zone est également effectuée sur la base du résultat de la comparaison effectuée pour les produits situés au niveau de la portion finale de la deuxième sous-zone.

4. Le procédé de contrôle selon l'une quelconque des revendications précédentes, **caractérisé en ce qu'**il est appliqué relativement à une pluralité de sous-zones de la zone de traitement thermique.

5. Le procédé de contrôle selon l'une quelconque des revendications précédentes, **caractérisé en ce que** :

quand la première sous-zone correspond à la sous-zone finale de la zone de traitement thermique, c'est-à-dire celle qui est la plus proche de la zone de refroidissement, les phases de calcul et de comparaison sont effectuées en se référant à une condition opérationnelle du système qui prévoit le traitement des produits situés au niveau des points de référence de la sous-zone finale avec un fluide injecté à une première température de refroidissement qui est inférieure à la température de régime, depuis ce moment jusqu'à leur sortie de la sous-zone finale ;
et également **caractérisé en ce que**
il prévoit l'action sur les moyens de réglage de la température du fluide injecté, pour la régler à la première température de refroidissement, quand la phase de comparaison établit que tous les produits situés dans la sous-zone finale satisferont les première et deuxième conditions requises de traitement.

6. Le procédé de contrôle selon les revendications 3 et 5, **caractérisé en ce que**, quand la deuxième sous-zone correspond à l'avant-dernière sous-zone de la zone de traitement, il prévoit l'action sur les moyens de réglage de la température du fluide injecté dans la sous-zone finale, pour régler cette température à la première température de refroidissement quand la phase de comparaison établit que les première et deuxième conditions requises de traitement seront également satisfaites par tous les produits situés dans la portion finale de l'avant-dernière sous-zone.

7. Le procédé de contrôle selon la revendication 6, **caractérisé en ce que**, pour ce qui est des produits situés dans l'avant-dernière sous-zone, la phase de calcul est effectuée en se référant à une condition opérationnelle dans laquelle la température du fluide injecté dans l'avant-dernière sous-zone est maintenue à son niveau de régime.

8. Le procédé de contrôle selon la revendication 5, **caractérisé en ce que**, si la phase de comparaison établit que, avec la température du fluide injecté dans la sous-zone finale réglée à la première température de refroidissement, au moins un produit situé dans la sous-zone finale ne satisfera pas la première ou deuxième condition requise de traitement, les phases de calcul et de comparaison sont répétées en se référant à une condition opérationnelle du système qui prévoit le traitement des produits situés au niveau des points de référence de la sous-zone finale avec un fluide injecté à la température de régime de cette même sous-zone finale, depuis ce moment jusqu'à leur sortie de la sous-zone finale, et également **caractérisé en ce que**, si dans ce cas la phase de comparaison établit à nouveau qu'au moins un produit situé dans la sous-zone finale ne satisfera pas la première condition requise de traitement ou que, étant à ce moment à une température inférieure à la température prédéfinie, ne satisfera pas la deuxième condition requise de traitement, la phase d'action sur les moyens de réglage de la température du fluide prévoit le réglage de la température du fluide injecté dans la sous-zone finale à une première température de surchauffe qui est supérieure à la température de régime.

9. Le procédé de contrôle selon l'une quelconque des revendications précédentes, **caractérisé en ce que** :

quand la première sous-zone correspond à l'avant-dernière sous-zone de la zone de traitement thermique, en se référant au parcours de déplacement, les phases de calcul et de comparaison sont effectuées en se référant à une condition opérationnelle du système qui prévoit le traitement des produits situés au niveau des points de référence de l'avant-dernière sous-zone avec un fluide injecté à une deuxième température de refroidissement qui est inférieure à la température de régime du fluide injecté pour cette sous-zone, depuis ce moment jusqu'à leur sortie de l'avant-dernière sous-zone ; et également **caractérisé en ce que**
il prévoit l'action sur les moyens de réglage de la température du fluide injecté dans l'avant-dernière sous-zone, pour la régler à sa deuxième température de refroidissement, quand la phase de comparaison établit que tous les produits situés dans l'avant-dernière sous-zone satisferont les première et deuxième conditions requises de traitement.

10. Le procédé de contrôle selon les revendications 3 et 9, **caractérisé en ce que**, quand la deuxième sous-zone correspond à l'avant-avant-dernière sous-zone de la zone de traitement, en se référant au parcours de déplacement, il prévoit l'action sur les moyens de réglage de la température du fluide injecté dans l'avant-dernière sous-zone, pour régler cette température à la deuxième température de refroidissement, quand la phase de comparaison établit que les première et deuxième conditions requises de traitement seront également satisfaites par tous les produits situés dans la portion finale de l'avant-avant-dernière sous-zone.

11. Le procédé de contrôle selon la revendication 10, **caractérisé en ce que**, pour ce qui est des produits situés dans la portion finale de l'avant-avant-dernière sous-zone, la phase de calcul est effectuée en se référant à une condition opérationnelle dans laquelle la température du fluide injecté dans l'avant-avant-dernière sous-zone est maintenue à son niveau de régime.

12. Le procédé de contrôle selon la revendication 10 ou 11, **caractérisé en ce que** la phase d'action sur les moyens de réglage de la température du fluide injecté dans l'avant-dernière sous-zone tient également compte des produits situés dans la portion finale de l'avant-avant-dernière sous-zone, uniquement quand les produits sont en déplacement le long du système.

13. Le procédé de contrôle selon la revendication 9, **caractérisé en ce que**, si la phase de comparaison pour l'avant-dernière sous-zone établit que, avec la température du fluide injecté dans l'avant-dernière sous-zone réglée à la deuxième température de refroidissement, au moins un produit situé dans l'avant-dernière sous-zone ne satisfera pas la première ou la deuxième condition requise de traitement, les phases de calcul et de comparaison pour l'avant-dernière sous-zone sont répétées en se référant à une condition opérationnelle du système qui prévoit le traitement des produits situés au niveau des points de référence de l'avant-dernière sous-zone avec un fluide injecté à la température de régime au moins jusqu'à leur sortie de l'avant-dernière sous-zone, et également **caractérisé en ce que**, si dans ce cas la phase de comparaison établit à nouveau qu'au moins un produit situé dans l'avant-dernière sous-zone ne satisfera pas la première condition requise de traitement ou que, étant à ce moment à une température inférieure à la température prédéfinie, ne satisfera pas la deuxième condition requise de traitement, la phase d'action sur les moyens de réglage de la température du fluide injecté dans l'avant-dernière sous-zone prévoit le réglage de ladite température du fluide injecté dans l'avant-dernière sous-zone à une deuxième valeur de surchauffe qui est supérieure au niveau de régime.

14. Le procédé de contrôle selon l'une quelconque des revendications précédentes, **caractérisé en ce que** :

quand la première sous-zone correspond à l'avant-avant-dernière sous-zone de la zone de traitement thermique, en se référant au parcours de déplacement, et quand la température du fluide injecté dans l'avant-avant-dernière sous-zone est réglée à une troisième température de refroidissement qui est inférieure à sa valeur de régime dans cette sous-zone, les phases de calcul et de comparaison pour l'avant-avant-dernière sous-zone sont effectuées en se référant à une condition opérationnelle courante du système ; et également **caractérisé en ce que**
il prévoit l'action sur les moyens de réglage de la température du fluide injecté dans l'avant-avant-dernière sous-zone, pour la régler à la température de régime, quand la phase de comparaison établit qu'au moins un des produits situés dans l'avant-avant-dernière sous-zone ne satisfera pas la première ou deuxième condition requise de traitement.

15. Le procédé de contrôle selon la revendication 14, **caractérisé en ce que**, quand la température du fluide injecté dans l'avant-avant-dernière sous-zone est réglée à une troisième température de refroidissement qui est inférieure à la valeur de régime de cette sous-zone, les phases de calcul et de comparaison pour l'avant-avant-dernière sous-zone ne sont effectuées que pour les produits situés dans la deuxième moitié de l'avant-avant-dernière sous-zone.

16. Le procédé de contrôle selon l'une quelconque des revendications précédentes, **caractérisé en ce que** :

quand la première sous-zone correspond à l'avant-avant-dernière sous-zone de la zone de traitement thermique, en se référant au parcours de déplacement, et quand la température du fluide injecté dans l'avant-avant-dernière sous-zone est réglée à la valeur de régime de cette sous-zone, les phases de calcul et de comparaison sont effectuées en se référant à une condition opérationnelle du système qui prévoit le traitement des produits situés au niveau des points de référence de l'avant-avant-dernière sous-zone avec un fluide injecté à une troisième température de refroidissement qui est inférieure à la température de régime pour cette sous-zone, depuis ce moment jusqu'à leur sortie de l'avant-avant-dernière sous-zone ; et également **caractérisé en ce que**
il prévoit l'action sur les moyens de réglage de la température du fluide injecté dans l'avant-avant-dernière sous-zone, pour la régler à la troisième température de refroidissement, quand la phase de comparaison établit que tous les produits situés dans l'avant-avant-dernière sous-zone ne satisferont pas les première et deuxième conditions requises de traitement.

17. Le procédé de contrôle selon l'une quelconque des revendications précédentes, **caractérisé en ce que** :

quand la première sous-zone correspond à l'avant-avant-dernière sous-zone de la zone de traitement thermique, en se référant au parcours de déplacement, et quand la température du fluide injecté dans l'avant-avant-dernière sous-zone est réglée à la valeur de régime de cette sous-zone, une autre phase de contrôle est effectuée pendant laquelle l'évolution thermique et la différence d'unités de pasteurisation accumulées entre les produits situés au niveau de deux points de référence successifs de l'avant-avant-dernière sous-zone sont calculées ; et également **caractérisé en ce que**
il prévoit l'action sur les moyens de réglage de la température du fluide injecté dans l'avant-avant-dernière sous-zone, pour la régler à une troisième température de refroidissement qui est inférieure à la température de régime, quand la phase de contrôle indique que l'évolution thermique ou la différence d'unités de pasteurisation accumulées entre les produits situés au niveau de deux points de référence adjacents sont supérieures aux valeurs maximums prédéfinies respectives, et la phase de comparaison établit que les première et deuxième conditions requises de traitement seront satisfaites par tous les produits situés dans l'avant-avant-dernière sous-zone en aval du point où les valeurs maximums prédéfinies ont été dépassées.

18. Le procédé de contrôle selon la revendication 17, **caractérisé en ce que** la phase de contrôle n'est effectuée que pour les produits situés dans la première moitié de l'avant-avant-dernière sous-zone.

19. Le procédé de contrôle selon l'une quelconque des revendications de 1 à 8, **caractérisé en ce que**, quand la zone de traitement thermique ne comprend que deux sous-zones, et quand la première sous-zone correspond à l'avant-dernière sous-zone de la zone de traitement thermique, en se référant au parcours de déplacement, l'avant-dernière sous-zone est gérée comme indiqué dans l'une quelconque des revendications de 14 à 17 relativement à l'avant-avant-dernière sous-zone.

20. Le procédé de contrôle selon l'une quelconque des revendications précédentes, **caractérisé en ce que** :

quand la première sous-zone correspond à une sous-zone en amont de l'avant-avant-dernière sous-zone de la zone de traitement thermique, en se référant au parcours de déplacement, et quand la température du fluide injecté dans la première sous-zone est réglée à la valeur de régime de cette sous-zone, les phases de calcul et de comparaison pour cette première sous-zone sont effectuées en se référant à une condition opérationnelle du système qui prévoit le traitement des produits situés au niveau des points de référence de la première sous-zone avec un fluide injecté à une quatrième température de refroidissement qui est inférieure à la température de régime pour cette sous-zone, depuis ce moment jusqu'à leur sortie de la première sous-zone ; et également **caractérisé en ce que**

il prévoit l'action sur les moyens de réglage de la température du fluide injecté dans la première sous-zone, pour la régler à la quatrième température de refroidissement, quand la phase de comparaison établit que tous les produits situés dans la première sous-zone satisferont les première et deuxième conditions requises de traitement.

21. Le procédé de contrôle selon l'une quelconque des revendications précédentes, **caractérisé en ce que** :

quand la première sous-zone correspond à une sous-zone en amont de l'avant-avant-dernière sous-zone de la zone de traitement thermique, en se référant au parcours de déplacement, et quand la température du fluide injecté dans la première sous-zone est réglée à la valeur de régime de cette sous-zone, une autre phase de contrôle est effectuée pendant laquelle l'évolution thermique et la différence d'unités de pasteurisation accumulées entre les produits positionnés au niveau de deux points de référence successifs de la première sous-zone sont calculées, et également **caractérisé en ce que** il prévoit l'action sur les moyens de réglage de la température du fluide injecté dans la première sous-zone, pour la régler à une quatrième température de refroidissement qui est inférieure à la température de régime, quand la phase de contrôle indique que l'évolution thermique ou la différence d'unités de pasteurisation accumulées entre les produits positionnés au niveau de deux points de référence adjacents sont supérieures aux valeurs maximums prédéfinies respectives, et la phase de comparaison établit que les première et deuxième conditions requises de traitement seront satisfaites par tous les produits situés dans la première sous-zone en aval du point où les valeurs maximums prédéfinies ont été dépassées.

22. Le procédé de contrôle selon l'une quelconque des revendications de 1 à 18, **caractérisé en ce que**, quand la zone de traitement thermique ne comprend que trois sous-zones, et quand la première sous-zone correspond à l'avant-avant-dernière sous-zone de la zone de traitement thermique, en se référant au parcours de déplacement, l'avant-avant-dernière sous-zone est gérée comme indiqué dans la revendication 20 ou 21 relativement aux sous-zones précédant l'avant-avant-dernière sous-zone.

23. Le procédé de contrôle selon l'une quelconque des revendications précédentes, **caractérisé en ce que**, en l'absence d'autres déterminations spécifiques, la température du fluide injecté dans chaque sous-zone est maintenue à son niveau de régime.

24. Un système de pasteurisation comprenant :

des moyens pour mouvoir des produits à pasteuriser sur un parcours de déplacement le long duquel sont disposées, les unes après les autres, au moins une zone de chauffage (A), une zone de traitement thermique (B) et une zone de refroidissement (C), la zone de traitement thermique étant à son tour subdivisée en une pluralité de sous-zones (K) ; les zones de chauffage et de refroidissement et les sous-zones de la zone de traitement thermique ayant aussi, chacune, leurs propres moyens pour injecter un fluide sur les produits qui traversent ladite zone et leurs propres moyens pour régler la température du fluide injecté dans lesdites zones ou sous-zones ; un système électronique de contrôle du cycle de pasteurisation, opérationnellement associé aux zones et sous-zones, au convoyeur, aux moyens d'injection du fluide et aux moyens de réglage de la température du fluide ; le système de pasteurisation étant **caractérisé en ce que** le système électronique de contrôle est programmé conformément au procédé de contrôle selon l'une quelconque des revendications précédentes.

FIG. 1

EP 1 972 210 B1

**EP 1 972 210 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1198996 A1
- EP 960574 A1
- WO 9419968 A
- US 2002073652 A